(19) Europäisches Patentamt / European Patent Office / Office européen des brevets

(11) **EP 2 413 708 B1**

(12) **EUROPEAN PATENT SPECIFICATION**

(45) Date of publication and mention
of the grant of the patent:
**06.05.2015 Bulletin 2015/19**

(21) Application number: **10709556.4**

(22) Date of filing: **22.03.2010**

(51) Int Cl.:
*A23F 5/32* (2006.01)    *A23F 5/36* (2006.01)
*A23F 5/38* (2006.01)    *A23L 2/395* (2006.01)
*A23P 1/06* (2006.01)

(86) International application number:
**PCT/EP2010/053675**

(87) International publication number:
**WO 2010/112359 (07.10.2010 Gazette 2010/40)**

(54) **INSTANT BEVERAGE PRODUCT**

INSTANTGETRÄNKPRODUKT

PRODUIT DE BOISSON INSTANTANÉE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.04.2009 EP 09157098**

(43) Date of publication of application:
**08.02.2012 Bulletin 2012/06**

(73) Proprietor: **Nestec S.A.**
**1800 Vevey (CH)**

(72) Inventors:
• **BRIEND, Anne Françoise Violette**
**CH-1350 Orbe (CH)**
• **SUDHARSAN, Mathalai Balan**
**CH-1004 Lausanne (CH)**
• **KESSLER, Ulrich**
**CH-1073 Savigny (CH)**
• **LACH, Laurent Josef Henry**
**CH-1020 Renens (CH)**
• **MEUNIER, Vincent Daniel Maurice**
**CH-1066 Epalinges (CH)**
• **CHANVRIER, Hélène Michèle Jeanne**
**F-88000 Epinal (FR)**
• **CARTIER, Jérémie**
**CH-1012 Lausanne (CH)**
• **KOCH, Dietrich**
**CH-1373 Chavornay (CH)**
• **SUTTER, Guido**
**CH-3186 Duedingen (CH)**
• **DUFFEY, Jean-Louis**
**F-74500 Lugrin (FR)**

(74) Representative: **Lomholt, Stig Bredsted et al**
**Nestec S.A.**
**CT-IAM**
**Avenue Nestlé 55**
**1800 Vevey (CH)**

(56) References cited:
**EP-A- 0 839 457       EP-A- 1 627 568**
**EP-A- 1 627 572       WO-A-2009/040249**
**WO-A-2009/059938     US-A- 4 351 849**
**US-A- 4 394 395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 413 708 B1**

## Description

### Field of the Invention

The present invention relates to a method of producing an instant beverage product by sintering of a base powder.

### Background and Prior Art

In general, instant beverages are used to describe products such as tea, coffee or the like which are sold in a form that is easily reconstitutable with water to form a drink. Such beverages are typically in solid form and are readily soluble in hot water.

Instant soluble coffee is a phrase used to describe coffee which has been prepared by extraction of roast and ground coffee followed typically by reconstitution of the extract into a powdered product by conventional means such as freeze-drying, spray-drying or the like.

In order to prepare a beverage, hot water is then simply added to the powder thus avoiding the complicated and time-consuming process which is involved when preparing a beverage from traditional roast and ground coffee.

However, unlike coffee beverages prepared from roast and ground coffee, those prepared from instant soluble coffee do not usually exhibit a fine foam on their upper surface when reconstituted with hot water.

The foamed upper surface in beverages prepared from roast and ground coffee are typically associated with and caused, at least in part, by the machines which brew with pressurised water and/or steam.

This foam is known to positively affect the mouthfeel of the product when consumed and so is highly desired by many consumers. Furthermore, the foam acts to keep more of the volatile aromas within the beverage so that they can be appreciated by the consumer rather than lost to the surrounding environment.

US-A-6,713,113 discloses a powdered soluble foaming ingredient which has a matrix containing a carbohydrate, a protein and entrapped pressurized gas. The gas is released upon addition of the dry powder to liquid. EP 1 627 568 discloses a process for preparing an instant beverage which includes heating a dried soluble coffee under sufficient pressure thereby forcing gas into internal voids of the dried coffee. EP 1 627 572 discloses a method for producing a powdered soluble foaming composition comprising amorphous particles having internal voids filled with atmospheric pressure gas.

US-A-4,830,869 and US-A-4,903,585, both to Wimmers, et al. disclose a method for making a coffee beverage having a thick layer of foamed coffee on its surface, similar in appearance to cappuccino coffee. A measured amount of spray-dried instant coffee and a small amount of cold water are combined with vigorous agitation to form a foamed coffee concentrate. Then, hot water is added to make a coffee beverage.

US-A-4,618,500 to Forquer discloses a method for preparing a brewed espresso-type coffee beverage which has froth on the surface of the beverage. Steam is injected into the brewed coffee beverage to produce the froth.

US-A-3,749,378 to Rhodes discloses an apparatus for foaming a coffee extract. Gas is introduced into the coffee extract and the foamed coffee is then spray-dried to make a soluble coffee product having a low bulk density.

A similar process is described in EP 0 839 457 B1 to Kraft Foods, whereby the soluble coffee powder is foamed by gas injection. The gas bubbles size is then reduced such that the final product will have gas bubbles of less than 10 micrometres.

Many instant foamed beverages are still lacking insofar as the foam initially produced is not conserved during consumption or the structure resembles a coarse foam rather than a fine and smooth (velvety) foam, ultimately desired by consumers. Alternatively or additionally, there may simply be insufficient foam produced.

It has also now been found that agglomeration of a precursor under certain conditions enables the production of an instant beverage product which provides excellent foam upon reconstitution with water.

Agglomeration of food products by sintering is known. For instance, US-A-6,497,911 to Niro, refers to a process of preparing a water soluble coffee or tea product using a non-rewetted particulate material obtained from an extract by drying. During the process, external compaction of the product is required resulting in a product which suffers from structural collapse of the internal pores.

US-A-5,089,279 to Conopco relates to a sintering process which is performed in a closed container so as not to lose humidity during sintering. This is suitable for confectionary, for instance, as it results in a sintered mass.

US-A-4,394,395 to Nestlé describes a process for manufacturing a food product where a powder is filled into moulds, lightly compressed and then heated to sinter the powder. This results in a moulded food product.

However, this does not give a product having the desired porosity characteristics required for foaming upon reconstitution with water.

Thus, agglomeration using a sintering process is known to cause the partial or complete collapse of the microstructure (pores) in the product within which gas would be held. This problem needs to be addressed in order to provide a beverage having a desirable foamed upper surface and good reconstitution properties.

Therefore, the present invention provides a method for producing a coffee product by sintering, which upon reconstitution yields a beverage with a desirable foamed upper surface.

## Summary of the Invention

Accordingly, the present invention relates to a method for the manufacture of an instant coffee product comprising the steps of: providing a porous particulate base powder; and sintering a layer of said powder for a period of between 2 s and 600 s while gas is forced through the layer, to form a sintered cake; wherein the porous base powder is characterised in that it has a particle porosity of at least 45%, wherein the pores have a $D_{50}$ diameter of less than 80 micrometres; and wherein the relative humidity of the gas used for sintering is between 15% and 70%; and wherein the sintered cake is formed into a powder after sintering.

## Brief description of the drawings

Figure 1 is a schematic representation of a product of the present invention, which shows a granulate (1) comprising closed pores (2), open pores with an opening diameter greater than 2 micrometres (3) and open pores with an opening diameter less than 2 micrometres (4).

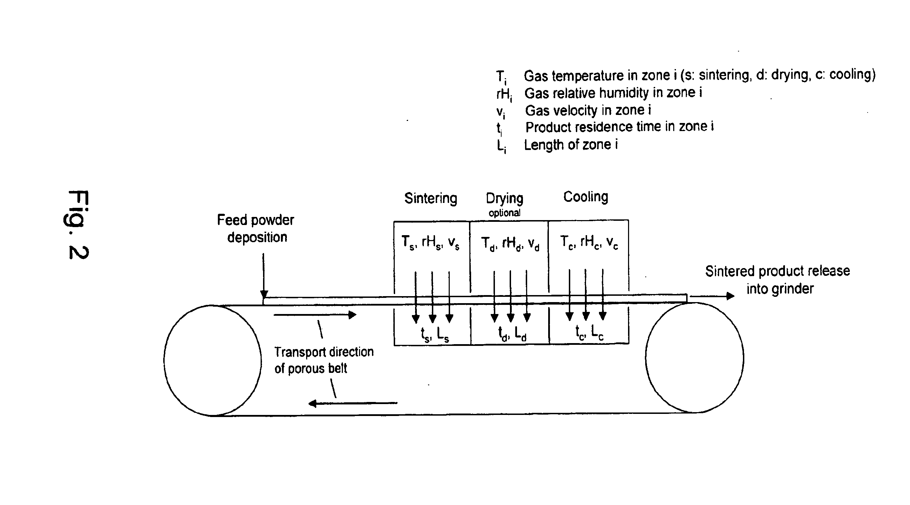

Figure 2 is a schematic diagram of an embodiment of the process of the present invention where a base powder is sintered on a porous belt followed by drying and cooling by forcing drying and cooling air, respectively, through the sintered cake.

Figure 3 is a drawing of the equipment used to measure the crema volume of the samples, wherein (8.1) is a plastic scale for reading the foam volume, (8.2) is a water reservoir, (8.3) is the lid of the reconstitution vessel, (8.4) is a connection valve, (8.5) is the reconstitution vessel and (8.6) is the release valve.

## Detailed Description of the Invention

The present invention relates to a method for producing instant coffee products which deliver an excellent foamed upper surface (also called "crema") upon reconstitution with a liquid.

The instant coffee product is a powder, such as a granulate. In the following the term "granulate" is used to describe a powder product which may be obtainable by agglomeration of smaller powder particles. The granulate particles thus comprise smaller constitutive powder particles. These smaller constitutive powder particles may be partially fused to form the bigger granulate particles.

In the following, the term "open pores" is used to define channels present in the powders of the present invention with connection to the surface of the product. The term "closed pores" is used to define completely closed voids. Thus liquids such as water may not penetrate into the closed pores.

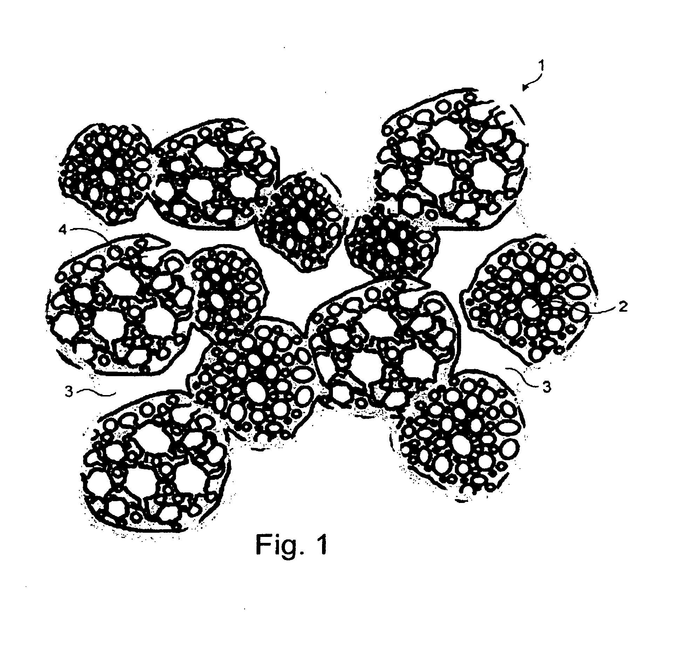

Referring to figure 1, it can be seen that the products of the present invention (1) comprise closed pores (2), open pores with an opening diameter of less than 2 micrometres (4) and open pores with an opening greater than 2 micrometres (3).

Upon reconstitution in a liquid, the products of the invention produce foam. The products of the invention may thus be further defined by their foaming porosity.

Foaming porosity is a measure of the porosity which contributes to foaming and characterises the potential foaming ability of the product of the invention. Indeed, open pores (3) will not contribute to the foaming as much, or even in some cases not at all compared to closed pores (2). Pores with opening diameter of less than 2 micrometres (4) may also contribute to foam since the capillary pressure in these pores is greater than the ambient pressure and this may enable foam formation. In the present invention, the foaming porosity is obtained by including closed pores (2) and open pores having an opening diameter of less than 2 micrometres (4).

Thus, for the purpose of measuring the foaming porosity, only closed pores (2) as well as open pores (4) having an opening diameter of less than 2 micrometres are taken into account as these are considered to contribute to foaming. The foaming porosity is obtained by the ratio of the volume of pores contributing to foaming over the volume of the aggregate excluding the volume of open pores having an opening diameter above 2 micrometres. This can be measured by mercury porosimetry or X-ray tomography.

The foaming porosity of the present product is at least 35%, such as at least 40% or at least 50%. Preferably, the foaming porosity is between 35 and 85%, more preferably between 40 and 80%, even more preferably between 40 and 75%, even more preferably between 45 and 70%, most preferably between 45 and 65%.

Another characteristic of the products of the invention is their open pores (3). These open pores form the channels. for liquid penetration into the products of the invention. The larger the volume and size of the open pores, the higher the liquid penetration and the better the dissolution. Thus, the products of the invention may be characterised by their "open pore volume" which provides an estimation of the ability to dissolve the products of the invention. In order to measure the open pore volume per gram of product, the volume of the interstices having an opening diameter between 1 and 500 micrometres is taken into account. This can be measured by mercury porosimetry.

The present products are preferably characterised by an open pore volume of less than 3mL/g. Preferably, the open pore volume is between 0.4 and 3mL/g, more preferably between 0.6 and 2.5mL/g, even more preferably between 0.8 and 2.5mL/g, most preferably between 0.8 and 2.0mL/g.

It has also been found by the present invention that another factor influencing the foam volumes obtained upon reconstitution is the size distribution of the closed pores, i.e. of the internal voids (2) and the open pores having an opening of less than 2 micrometres (4). According to the invention, the products preferably have an average closed pore diameter $D_{50}$ of less than 80 micrometres. Preferably the pores have an average diameter $D_{50}$ of less than 60 micrometres, more preferably less than 50 micrometres, even more preferably less than 40 micrometres, most preferably less than 30 micrometres. The pore size distribution is based on the void space distribution.

The pore size distribution may preferably be characterised by a distribution span factor of less than 4, preferably less than 3, most preferably less than 2. The distribution span factor is obtained by X-ray tomography. The span of the distribution is calculated by the following equation:

$$\text{Span} = \frac{D_{90} - D_{10}}{D_{50}}$$

wherein $D_{90}$, $D_{10}$ and $D_{50}$ represent the equivalent pore size which 90%, 10% and 50%, respectively, of the pores have a size equal to or below. Thus, the lower the span factor, the more narrow and homogeneous the distribution of the pores.

Thus, the instant beverage product of the present invention is preferably characterised in that it has a foaming porosity of at least 35%, preferably has an open pore volume of less than 3mL/g and preferably has a closed pore average diameter $D_{50}$ of less than 80 micrometres.

A powder of the invention typically has a tapped density of 150-300 g/L, preferably 200-250 g/L.

Tapped density is determined by pouring a powder into a cylinder, tapping the cylinder in a specific manner to achieve more efficient particle packing, recording the volume, weighing the product, and dividing weight by volume. The apparatus used is a JEL jolting density metre STAV 2003.

The water content of a product of the invention is preferably between 2% and 4.5%, more preferably between 3% and 4%.

The product according to the invention is an instant coffee product.

Thus, the product of the invention can be used, for instance, as a foaming instant coffee product or can be blended with other dry food and beverage ingredients such as flavours, sweeteners, and creamers to formulate a wide variety of foaming instant beverage products.

The product of the invention contains gas (e.g. trapped air) for forming a foamed upper surface when reconstituted with water.

The powders of the invention may thus be used in the preparation of an instant beverage. Preferably, the instant beverage is coffee. Upon reconstitution, the instant beverage preferably has a crema of at least 3 mL, such as at least 5 mL, when using 5 g of product in 200 mL of deionised water at 85°C. The amount of crema produced can be measured with a simple device (Figure 6) consisting of a reconstitution vessel connected to a water reservoir, which is initially blocked off with a valve. After reconstituting, the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

In the method of the invention, an instant coffee product is obtained by sintering a layer of porous particulate base powder while gas is forced through the layer, to form a sintered cake.

According to the process of the invention, a porous particulate base powder is provided in a first step. This particulate precursor may be, for example, a powdered instant coffee product that has been produced according to traditional methods of spray-drying or freeze-drying of extracts derived from roast and ground coffee. Thus, precursors which have been spray-dried, gas-injected spray-dried, gas-injected extruded, gas-injected freeze-dried, and the like are suitable in the present method. Alternatively, the precursor powder may be spray-frozen particles. Such products and their methods of manufacture are well known to the person skilled in the art.

Preferably the precursor powder is spray-dried. Typically, the precursor comprises instant coffee particles.

The porous base powder is characterised in that it has a particle porosity of at least 45%, and that the pores have a $D_{50}$ diameter of less than 80 micrometres. Such a powder may e.g. be obtained according to the method described in US 60/976,229. This provides the advantage that the instant beverage powder produced provides, upon reconstitution, more crema. Preferably, the pore diameter distribution span of the powder is less than 4.

The tapped density of the precursor is typically between 150 and 600 g/L.

The second step in the present method is the sintering of the particulate porous base powder to form an agglomerated cake. This is achieved by sintering a layer of the base powder while forcing gas through the layer. It has been found that this method enable the pore structure of the sintered particles to remain intact and thereby to retain a desired amount of gas therein, leading to a sintered product with good crema forming properties. Furthermore, is allows a fast and homogenous sintering to be achieved. The method has a high output capacity due to the relatively short sintering times needed.

The sintering is preferably achieved by heating the layer of base powder to a temperature above its glass transition temperature. The glass transition temperature of instant coffee granules can be higher or lower depending on the specific chemical composition and moisture level. The glass transition temperature can intentionally be raised or lowered by simply decreasing or increasing, respectively, the moisture content of the coffee product using any suitable method known to one skilled in the art.

The glass transition temperature can be measured using established Differential Scanning Calorimetry or Thermal Mechanical Analysis techniques. The glass transition temperature marks a secondary phase change characterised by transformation of the powder product from a rigid glassy state to a softened rubbery state.

In order to achieve controlled fusion of the particles, the temperature at which sintering is carried out is preferably at least 30°C above the glass transition temperature of the agglomerated cake, such as e.g. between 30°C and 50°C above the glass transition temperature of the agglomerated cake, more preferably at least 40°C and even more preferably at least 45°C above the glass transition temperature of the agglomerated cake.

In order to achieve controlled fusion of the particles, it is desirable that the precursor particles are firstly dried to the desired (internal) final water content before undergoing the sintering step. It has been found that this improves the foaming and dissolution characteristics of the sintered product. The particles, prior to sintering, are preferably dried to a moisture content of from 1 to 7% by weight, based on the total weight of the particles, more preferably from 1 to 6%, most preferably from 2 to 5%.

The layer of base particles may be heated to the sintering temperature by any suitable method known in the art, e.g. by convection, infra red or microwave radiation, or heating elements in contact with the support. Preferably, the heating is in whole or part provided by forcing a gas with a suitable temperature through the layer.

The gas being forced through the layer may be any suitable gas, preferably atmospheric air is used. The relative humidity of the gas used for sintering is between 15% and 70%.

The velocity of gas through the layer of base particles is preferably between 0.01 m/s and 5 m/s, such as e.g. between 0.1 m/s and 2 m/s, or between 0.2 m/s and 1 m/s. The gas flow through the layer may be achieved by any suitable means known in the art, e.g. by blowing air from one side of the layer and/or by suction of air from the other side. Any suitable means of applying a gas pressure difference over the layer of the cake may be applied. If the layer of base particles is supported only on one side, e.g. when sintering on a single belt, during sintering, the air flow is preferably from the unsupported side of the layer to the supported side.

Sintering can be carried out according to any well known sintering process, e.g. sintering on trays, though belt sintering is preferred. Preferably a porous belt is used to allow gas to be forced through the layer of base particles. The layer may be supported by two endless belts, one on each side, during sintering. If tablets or shaped objects are desired, the sintering may e.g. be performed in porous moulds of the desired shape.

In one embodiment of the invention, the particles are distributed onto a porous surface to form a layer. Preferably the layer has a thickness of from 2 to 50 mm, more preferably 5 to 40 mm, most preferably 10 to 30 mm.

The temperature at which sintering is carried out is preferably between 0°C and 150°C, such as between 40°C and 110°C, or between 60°C and 100°C.

The sintering must be carried out during a period of time which enables the correct degree of fusing of the particles without causing undesirable changes to the internal structure of the particles. In the method of the invention a relatively fast sintering time can be achieved as compared to prior art methods, allowing for good conservation of the internal structure of the base powder. In the invention the layer of base particles is sintered for between 2 s and 600 s, such as between 2 s and 300 seconds, between 5 s and 300 s, or between 10 s and 200 s.

During the sintering process, a slight and controlled compaction pressure may be applied to the layer of base particles, or the flow of gas may be used to effect a slight compaction of the layer.

During the sintering process, the product may take up moisture from, or loose moisture to, the gas being forced through the layer. The resulting final moisture of the sintered product is typically from 1% to 12% by weight of water based on the total weight of the product. Following sintering, the sintered cake may be dried by any method known in the art. Preferably, the sintered cake is dried on the sintering support by forcing a gas with a suitable temperature and humidity through the cake. Furthermore, the sintered cake may be cooled. Any suitable means of cooling may be used. Preferably, the sintered cake is cooled on the sintering support by forcing a gas with a suitable temperature through the cake. If both drying and cooling is performed on the belt, preferably drying is performed before cooling.

The sintered cake is texturised to obtain the desired instant coffee product. As a powder is desired, texturising may be performed by cutting or grinding of the cake to form particles having a desired average diameter, e.g. resembling typically freeze-dried or agglomerated instant beverage products. For example, the texturising may be carried out by forcing the agglomerated cake through a sieve having a mesh size between 1 and 5mm, preferably about 2.5mm. If other shapes are desired the sintered cake may e.g. be cut or formed into the desired shapes by any suitable method.

Optionally the products may be dried after texturisation in order to provide the sintered product with a desired moisture content. The moisture content is typically between 2% and 8% by weight of water based on the total weight of the product. Preferably the final product has a moisture content between 2% and 4.5%, more preferably about 3.5%.

If the product is a powder it typically has a tapped density between 150-300 g/L.

A product obtainable by the process described above is typically particularly suited for foaming instant coffee beverages. It may also be suited for use in foaming instant cappuccino or latte type beverage mixes that are formulated with a foaming creamer powder composition containing protein, such as foaming creamer compositions described in U.S. Pat. No. 4,438,147 and in EP 0 458 310 or in U.S. Pat. No. 6,129,943, as a means to increase the volume of beverage froth produced upon reconstitution in liquid.

The present invention is further illustrated by means of the following examples.

## Examples

### Mercury porosimetry to evaluate foaming porosity, particle porosity and open pore volume

AutoPore IV 9520 was used for the structure evaluation (Micromeritics Inc. Norcrose, GA, USA). The operation pressure for Hg intrusion was from 0.4 psia to 9000 psia (with low pressure from 0.4psia to 40psia and high pressure port from 20 to 9000 pisa). The pore diameter under this pressure is ranged from 500 to 0.01 um. The data reported was volume (ml/g) at different pore diameter (um).

About 0.1 to 0.4 g of samples was precisely weighted and packed in a penetrometer (volume 3.5 ml, neck or capillary stem diameter 0.3 mm and stem volume of 0.5 ml).

After the penetrometer was inserted to the lower pressure port, sample was evacuated at 1.1 psia/min, then switch to a medium rate at 0.5 pisa and a fast rate at 900 $\mu$m Hg. The evacuating target was 60 $\mu$m Hg. After reaching the target, the evacuation was continued for 5 min before Hg is filled in.

The measurement was conducted in set-time equilibration. That is, the pressure points at which data are to be taken and the elapsed time at that pressure in the set-time equilibration (10 sec) mode. Roughly 140 data points were collected at the pressure ranges.

The bulk volume of the granulate was obtained from the initial volume of mercury and the sample holder. The volume of the open pores with opening diameter greater than 2 micrometers (3) was obtained after intrusion with mercury up to a diameter of 2 micrometer. Subtraction of this volume from the bulk volume of the granulate gave the new volume of the granulate which comprises the closed pores (2), open pores with opening diameters less than 2 micrometers (4) and the volume of the coffee matrix. The volume of the closed pores, open pores with opening larger than 2 micrometers in the granulate was obtained by subtracting the volume of the coffee matrix from the new volume of the granulate. The volume of the coffee matrix was obtained from the weight of the sample and coffee matrix density. The foaming porosity is the ratio of the volume of closed pores and open pores having an opening diameter of less than 2 micrometer over the new volume of the granulate.

The particle porosity of the precursor powder may be measures using the method as described in US 60/976,229.

The volume of open pores per gram of product in the diameter range 1 to 500 micrometres gives the "open pore volume".

### Determination of the internal structure of coffee particles by microcomputed X-ray tomography

X-ray tomography scans were performed with a 1172 Skyscan MCT (Antwerpen, Belgium) with a X-ray beam of 80kV and 100uA. Scans were performed with the Skyscan software (version 1.5 (build 0) A (Hamamatsu 10Mp camera), reconstruction with the Skyscan recon software (version 1.4.4) and 3D image analysis with CTAn software (version 1.7.0.3, 64-bit).

To obtain a pixel size of 1um, the camera was set up at 4000x2096 pixels and samples were placed in the Far position. Exposure time is 2356 ms. Scan was performed over 180°, the rotation step was 0.3° and the frame averaging was 4.

The reconstruction of the dataset was performed over 800 slices in average, with the settings contrast at 0-0.25.

Smoothing and ring artefact reduction were set up at 1 and 10, respectively.

3D image analysis was performed on the 1 um per pixel datasets. The analysis was performed in two steps: (i) a first step to select the particle be analysed by excluding the inter particle voids, (ii) the second step to obtain the distribution of the porosity in the selected region of interest. The foaming porosity value obtained by this technique matched closely that obtained by mercury porosimetry.

Selection of the particles, i.e. volume of interest

The images of 1um per pixel resolution in grey levels were segmented at a grey level of 30 out of 255, cleaned by removing any single spots smaller than 16 pixels, and then dilated by mathematical morphology (radius of 3 pixels). The selection of the volume of interest was performed through the shrink-wrap function, and then this volume was eroded by mathematical morphology (radius of 3 pixels) to adjust to the surface of the particles.

**Void space distribution in the region of interest:**

The images were reloaded and segmented at a grey level of 40 out of 255. The foaming porosity was then calculated as the ratio of the volume of pores to the volume of the particles, the volume of the particles being equal to the volume of interest. The structure separation gave the pores size distribution.

Example 1

Preparation of a foaming granulated soluble coffee product by belt sintering

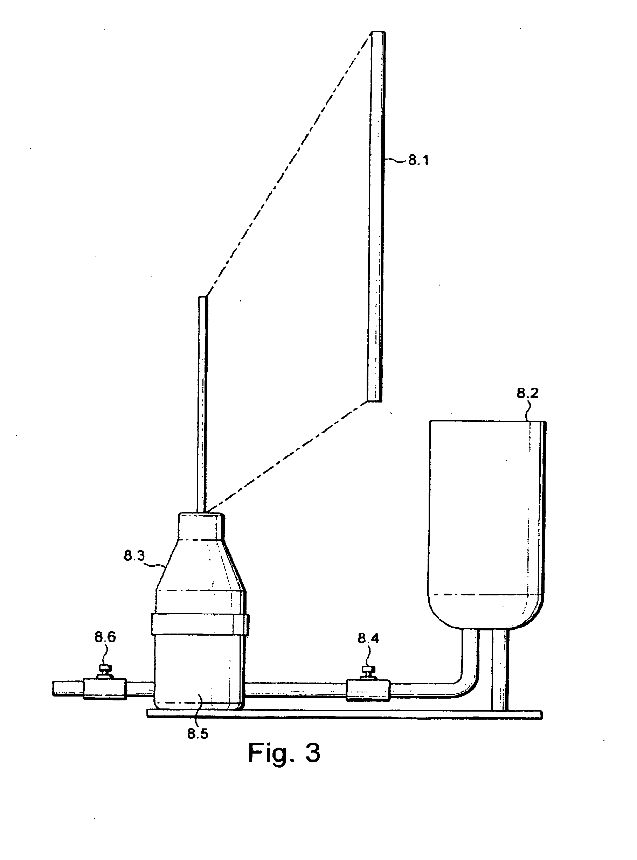

A spray-dried soluble coffee powder with particle porosity of more than 45%, mean pore diameter ($D_{50}$) of less than 80 micrometres and a pore diameter distribution span of less than 4, served as particulate precursor. This powder was evenly distributed in a layer on a continuous porous belt with a product layer thickness of 10mm. The product on the belt was then conveyed into a zone of controlled atmosphere where it was heated and humidified by sucking hot and humid air through the powder layer and the supporting belt at a mean velocity of 0.2 m/s. The air temperature was 70°C and the relative humidity was 54%. During this process the particles were heated and took up moisture from the humid air. The particles fused together at their points of contact (sintering) and formed a cake of agglomerated particles. The product residence time in the sintering zone was 15s. The product then passed through a cooling zone where cooled and pre-dried ambient air was sucked through the sintered cake, the resulting product moisture was 5.5g $H_2O$ / 100g product. The cake was then removed from the belt and passed through a grinder with a gap size of 2.5 mm. Fine particles with a diameter of D<0.355 mm were removed by sieving and recirculated. The granulates were dried to a final water content of 3.2g $H_2O$/ 100g product in a fluidised bed with hot air at 50°C during about 10 min. The product was reconstituted with hot water (2.5 g powder / 100 ml hot water) and achieved a foam covering the surface of the beverage, foam volume was measured by the method described herein using the apparatus shown in figure 3. The foam appearance was similar to the foam known as "crema" on a roast and ground coffee beverage obtained from an espresso machine. Tapped density was measured by the method described herein. The following properties were obtained:

| Closed porosity | Humidity | Tapped density | Foam |
|---|---|---|---|
| 59.4 % | 3.2 % | 244 g/l | 8.5 ml |

Example 2

Preparation of a foaming granulated soluble coffee product by belt sintering

A spray-dried soluble coffee powder with a particle porosity of more than 45%, a mean pore diameter ($D_{50}$) of less than 80 micrometres and a pore diameter distribution span of less than 4, served as particulate precursor. This powder was evenly distributed in a layer on a continuous porous belt with a product layer thickness of 10mm. The product on the belt was then conveyed into a zone of controlled atmosphere where it was heated and humidified by sucking hot and humid air through the powder layer and the supporting belt at a mean velocity of 0.2 m/s. The air temperature was 90°C and the relative humidity was 25%. During this process the particles were heated and took up moisture from the humid air. The particles fused together at their points of contact (sintering) and formed a cake of agglomerated particles. The product residence time in the sintering zone was 14s. The product then passed through a cooling zone where cooled and pre-dried ambient air was sucked through the sintered cake, the resulting product moisture was 5.1g $H_2O$ / 100g

product. The cake was then removed from the belt and passed through a grinder with a gap size of 2.5 mm. Fine particles with a diameter of D<0.355 mm were removed by sieving and recirculated. The granulates were dried to a final water content of about 3.3g $H_2O$/ 100g product in a fluidised bed with hot air at 50°C during about 10 min. The product was reconstituted with hot water (2.5 g powder / 100 ml hot water) and achieved a foam covering the surface of the beverage, foam volume was measured by the method described herein using the apparatus shown in figure 3. The foam appearance was similar to the foam known as "crema" on a roast and ground coffee beverage obtained from an espresso machine. Tapped density was measured by the method described herein. The following properties were obtained:

| Closed porosity | Humidity | Tapped density | Foam |
| --- | --- | --- | --- |
| 60.4 % | 3.3 % | 248 g/l | 7.5 ml |

Example 3

Preparation of a foaming granulated soluble coffee product by belt sintering

A spray-dried soluble coffee powder with a particle porosity of more than 45%, a mean pore diameter ($D_{50)}$) of less than 80 micrometres and a pore diameter distribution span of less than 4, served as particulate precursor. This powder was evenly distributed in a layer on a continuous porous belt with a product layer thickness of 20mm. The product on the belt was then conveyed into a zone of controlled atmosphere where it was heated and humidified by sucking hot and humid air through the powder layer and the supporting belt at a mean velocity of 0.2 m/s. The air temperature was 73°C and the relative humidity was 41%. During this process the particles were heated and took up moisture from the humid air. The particles fused together at their points of contact (sintering) and formed a cake of agglomerated particles. The product residence time in the sintering zone was 14s. The product then passed through a cooling zone where cooled and pre-dried ambient air was sucked through the sintered cake, the resulting product moisture was 5.5g $H_2O$ / 100g product. The cake was then removed from the belt and passed through a grinder with a gap size of 2.5 mm. Fine particles with a diameter of D<0.355 mm were removed by sieving and recirculated. The granulates were dried to a final water content of about 3.5g $H_2O$/ 100g product in a fluidised bed with hot air at 50°C during about 10 min. The product was reconstituted with hot water (2.5 g powder / 100 ml hot water) and achieved a foam covering the surface of the beverage, foam volume was measured by the method described herein using the apparatus shown in figure 3. The foam appearance was similar to the foam known as "crema" on a roast and ground coffee beverage obtained from an espresso machine. Tapped density was measured by the method described herein. The following properties were obtained:

| Closed porosity | Humidity | Tapped density | Foam |
| --- | --- | --- | --- |
| 62.2 % | 3.5 % | 254 g/l | 8.3 ml |

Example 4

Preparation of a foaming granulated soluble coffee product by belt sintering followed by belt drying

A spray-dried soluble coffee powder with a particle porosity of more than 45%, a mean pore diameter ($D_{50)}$) of less than 80 micrometres and a pore diameter distribution span of less than 4, served as particulate precursor. This powder was evenly distributed in a layer on a continuous porous belt with a product layer thickness of 10mm. The product on the belt was then conveyed into a zone of controlled atmosphere where it was heated and humidified by sucking hot and humid air through the powder layer and the supporting belt at a mean velocity of 0.2 m/s. The air temperature was 70°C and the relative humidity was 54%. During this process the particles were heated and took up moisture from the humid air. The particles fused together at their points of contact (sintering) and formed a cake of agglomerated particles. The product residence time in the sintering zone was 15s. The product on the belt was then passed through a drying zone where pre-dried air at 70°C was sucked through the sintered cake. The dried cake at a moisture content of 3.1 % was then removed from the belt and passed through a grinder with a gap size of 2.5 mm. The fines from the grinding operation were not recirculated. The granulate was then cooled in a fluidised bed with dry air at 30°C for about 10 min. The product was reconstituted with hot water (2.5 g powder / 100 ml hot water) and achieved a foam covering the surface of the beverage, foam volume was measured by the method described herein using the apparatus shown in figure 3. The foam appearance was similar to the foam known as "crema" on a roast and ground coffee beverage obtained from an espresso machine. Tapped density was measured by the method described herein. The following properties were obtained:

| Closed porosity | Humidity | Tapped density | Foam |
|---|---|---|---|
| 60.0 % | 3.4 % | 238 g/l | 8.5 ml |

**Claims**

1. Method for the manufacture of an instant coffee product comprising the steps of:

    a. Providing a porous particulate base powder
    b. Sintering a layer of said powder for a period of between 2 s and 600 s while gas is forced through the layer, to form a sintered cake,

    wherein the porous base powder is **characterised in that** it has a particle porosity of at least 45%, wherein the pores have a $D_{50}$ diameter of less than 80 micrometres; and wherein the relative humidity of the gas used for sintering is between 15% and 70%; and wherein the sintered cake is formed into a powder after sintering.

2. Method according to claim 2, wherein the porous base powder has a tapped density of 150-600g/L.

3. Method of claim 1 or claim 2 wherein the velocity of gas through the layer is between 0.01 m/s and 5 m/s.

4. Method according to any of the preceding claims, wherein the sintering is carried out at a temperature of between 30°C and 50°C above the glass transition temperature of the layer of base powder.

5. Method according to any of the preceding claims, wherein the sintering is carried out at between 0°C and 150°C.

6. Method according to any of the preceding claims wherein the layer being sintered has a thickness of between 2 and 50 mm.

7. Method according to any of the preceding claims wherein the sintered cake is dried by forcing a drying gas through the layer after sintering.

8. Method according to any of the preceding claims wherein the sintered cake is cooled by forcing a cooling gas through the layer after sintering.

9. Method according to any of the preceding claims, wherein the instant coffee product has a final water content of 2 to 4.5%, preferably about 3.5%.

**Patentansprüche**

1. Verfahren für die Herstellung eines Instant-Kaffeeprodukts mit den folgenden Schritten:

    a. Bereitstellen eines Basispulvers mit porösen Partikeln
    b. Sintern einer Schicht des Pulvers für einen Zeitraum zwischen 2 s und 600 s, während Gas durch die Schicht gedrückt wird, um einen Sinterkuchen zu bilden,

    wobei das poröse Basispulver **dadurch gekennzeichnet ist, dass** es eine Partikelporosität von mindestens 45% besitzt, wobei die Poren einen $D_{50}$ Durchmesser von weniger als 80 Mikrometern besitzen, und wobei die relative Feuchtigkeit des zum Sintern verwendeten Gases zwischen 15% und 70% beträgt, und wobei der Sinterkuchen nach dem Sintern in ein Pulver geformt wird.

2. Verfahren nach Anspruch 2, wobei das poröse Basispulver eine Stampfdichte von 150-600g/L besitzt.

3. Verfahren nach Anspruch 1 oder Anspruch 2, wobei die Geschwindigkeit des Gases durch die Schicht zwischen 0,01 m/s und 5 m/s beträgt.

**4.** Verfahren nach einem der vorhergehenden Ansprüche, wobei das Sintern bei einer Temperatur zwischen 30°C und 50°C über der Glasübergangstemperatur der Schicht des Basispulvers durchgeführt wird.

**5.** Verfahren nach einem der vorhergehenden Ansprüche, wobei das Sintern zwischen 0°C und 150°C durchgeführt wird.

**6.** Verfahren nach einem der vorhergehenden Ansprüche, wobei die Schicht, die gesintert wird, eine Stärke zwischen 2 und 50 mm besitzt.

**7.** Verfahren nach einem der vorhergehenden Ansprüche, wobei der Sinterkuchen getrocknet wird, indem nach dem Sintern ein Trocknungsgas durch die Schicht gedrückt wird.

**8.** Verfahren nach einem der vorhergehenden Ansprüche, wobei der Sinterkuchen gekühlt wird, indem nach dem Sintern ein Kühlgas durch die Schicht gedrückt wird.

**9.** Verfahren nach einem der vorhergehenden Ansprüche, wobei das Instant-Kaffeeprodukt einen Endwassergehalt von 2 bis 4,5%, vorzugsweise ca. 3,5%, besitzt.

**Revendications**

**1.** Procédé pour la fabrication d'un produit de café instantané comprenant les étapes consistant à :

a. fournir une poudre de base particulaire poreuse,
b. fritter une couche de ladite poudre pendant une période comprise entre 2 s et 600 s tandis que du gaz est forcé à travers la couche, afin de former un gâteau fritté,

dans lequel la poudre de base poreuse est **caractérisée en ce qu'**elle présente une porosité de particule d'au moins 45%, dans lequel les pores ont un diamètre $D_{50}$ inférieur à 80 micromètres ; et dans lequel l'humidité relative du gaz utilisé pour le frittage est compris entre 15% et 70% ; et dans lequel le gâteau fritté est formé dans une poudre après frittage.

**2.** Procédé selon la revendication 1, dans lequel la poudre de base poreuse présente une masse volumique après tassement de 150-600 g/L.

**3.** Procédé selon la revendication 1 ou la revendication 2, dans lequel la vitesse de gaz à travers la couche est comprise entre 0,01 m/s et 5 m/s.

**4.** Procédé selon l'une quelconque des revendications précédentes, dans lequel le frittage est réalisé à une température comprise entre 30°C et 50°C au-dessus de la température de transition vitreuse de la couche de poudre de base.

**5.** Procédé selon l'une quelconque des revendications précédentes, dans lequel le frittage est réalisé à une température comprise entre o°C et 150°C.

**6.** Procédé selon l'une quelconque des revendications précédentes, dans lequel la couche qui est frittée présente une épaisseur comprise entre 2 et 50 mm.

**7.** Procédé selon l'une quelconque des revendications précédentes, dans lequel le gâteau fritté est séché en forçant un gaz de séchage à travers la couche après frittage.

**8.** Procédé selon l'une quelconque des revendications précédentes, dans lequel le gâteau fritté est refroidi en forçant un gaz de refroidissement à travers la couche après frittage.

**9.** Procédé selon l'une quelconque des revendications précédentes, dans lequel le produit de café instantané présente une teneur finale en eau de 2 à 4,5%, de préférence environ 3,5%.

Fig. 1

Fig. 2

12

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6713113 A
- EP 1627568 A
- EP 1627572 A
- US 4830869 A
- US 4903585 A, Wimmers
- US 4618500 A
- US 3749378 A
- EP 0839457 B1
- US 6497911 A
- US 5089279 A
- US 4394395 A
- US 60976229 B
- US 4438147 A
- EP 0458310 A
- US 6129943 A